**Europäisches Patentamt**

**European Patent Office**

**Office européen des brevets**

(11) Veröffentlichungsnummer: **0 063 624**
**B1**

(12) **EUROPÄISCHE PATENTSCHRIFT**

(45) Veröffentlichungstag der Patentschrift:
**18.12.85**

(21) Anmeldenummer: **81103119.4**

(22) Anmeldetag: **25.04.81**

(51) Int. Cl.⁴: **G 01 T 1/38**

(54) Verfahren und Schaltungsanordnung zum Diskriminieren von durch alpha- und/oder beta-Strahler erzeugten Impulsen.

(43) Veröffentlichungstag der Anmeldung:
**03.11.82 Patentblatt 82/44**

(45) Bekanntmachung des Hinweises auf die Patenterteilung:
**18.12.85 Patentblatt 85/51**

(84) Benannte Vertragsstaaten:
**BE CH DE FR GB LI NL**

(56) Entgegenhaltungen:
**US - A - 4 262 203**

**INSTRUMENTS AND EXPERIMENTAL TECHNIQUES,
Band 18, Nr. 6, Teil 1, November/December 1975, Seiten
1764-1767, New York, U.S.A., E.N. KUZIN et al.: "Device
for identifying recoil protons according to the shape of
the pulses in a proportional counter"**

(73) Patentinhaber: **Kernforschungszentrum Karlsruhe
GmbH, Weberstrasse 5, D-7500 Karlsruhe 1 (DE)**

(72) Erfinder: **Kiefer, Hans, Prof.Dr.Dipl.-Phys.,
Max-Planck-Strasse 7, D-7514 Eggenstein-Leop. 2 (DE)**
Erfinder: **Röber, Hans-Gerd, Dornröschenweg 24,
D-7500 Karlsruhe (DE)**
Erfinder: **Reinhardt, Bernd, Durlacher Strasse 41,
D-7500 Karlsruhe 41 (DE)**

**Beschreibung**

Die Erfindung betrifft ein Verfahren und eine Schaltungsanordnung zum Diskriminieren von durch $\alpha$- und/oder $\beta$-Strahler erzeugten Impulsen nach dem Oberbegriff des Anspruches 1.

In einem Detektor nach Patentanmeldung EP-A-0 033 381 (Art. 54,3 EPÜ) werden Detektorimpulse erzeugt, deren Vorderflanken in einer im Nanosekundenbereich liegenden Zeit in erster Näherung linear ansteigen und gleichzeitig für $\alpha$-Impulse und $\beta$-Impulse stark unterschiedliche Steigungen aufweisen. Weiterhin ist eine Einrichtung zum Identifizieren von Rückstossprotonen und Elektronen gemäss der Impulsform eines Proportionalzählers bekannt. In der Druckschrift [Instruments and Experimental Techniques, Band 18, Nr. 6, Teil 1, Nov./Dec. 1975, Seiten 1764–1767, New York (US)] wird eine elektrische Amplituden-Schwellenschaltung zum Trennen solcher Protonen und Elektronen beschrieben. Die elektrischen Stromimpulse werden jedoch mittels einer Verzögerungsleitung in ihrer Form geändert und anschliessend integriert. Durch die Stromimpulsformgebung ergeben sich annähernd Rechtecksignale mit einer für das jeweilige Teilchen spezifischen Höhe. Die Impulshöhe bestimmt bei der anschliessenden Integration die Steigung der Kurve und somit den späteren Spannungswert, der nach Ablauf der Integration für einen gewissen Zeitraum aufrechterhalten wird.

Der Erfindung liegt die Aufgabe zugrunde, ein Verfahren und eine Schaltungsanordnung zu dessen Durchführung zu entwickeln, das es ermöglicht, die am Ausgang des einen Detektors abgegebenen Detektorimpulse unabhängig von der durch die Teilchenenergie bestimmten Impulshöhe möglichst eindeutig als $\alpha$- oder $\beta$-Impulse zu identifizieren.

Diese Aufgabe wird mit einem Verfahren nach dem Oberbegriff des Anspruches 1 durch die in dessen Kennzeichen und im Kennzeichen des eine Schaltungsanordnung zum Durchführen des Verfahrens betreffenden Anspruches 3 genannten Merkmale gelöst.

Die mit der Erfindung erzielten Vorteile bestehen insbesondere darin, dass eine vorbestimmte Nachweisgrenze bei wesentlich verkürzter Messzeit erreicht wird, oder dass bei unverkürzter Messzeit eine wesentlich erhöhte Nachweisempfindlichkeit erzielbar ist, dass insbesondere bei $\alpha$-$\beta$-Mischproben eine wesentliche Verkleinerung des Messfehlers der der $\alpha$-Impulsrate eintritt, dass das zeitliche Auflösungsvermögen wesentlich erhöht wird, und dass die Trennung der $\alpha$- und $\beta$-Impulse mit hoher Genauigkeit ermöglicht wird.

Das im Kennzeichen des Anspruches 1 beschriebene Verfahren und ein Ausführungsbeispiel einer Schaltungsanordnung zum Durchführen dieses Verfahrens wird anhand der Zeichnung näher beschrieben.

Es zeigen:

Fig. 1 Vorderflanken eines $\alpha$- und eines $\beta$-Impulses in den ersten 20 ns und ein die Zeitdiskriminierung steuernder Torzeitimpuls,

Fig. 2 Blockschaltbild einer Diskriminatorschaltung,

Fig. 3 Schaltbild der Komparatoren, der Speicher, der Startschaltung, der Auswertelogik und der Resetlogik,

Fig. 4 Schaltbild des Torzeitimpulsgenerators, des elektronischen Schalters und des Integrators.

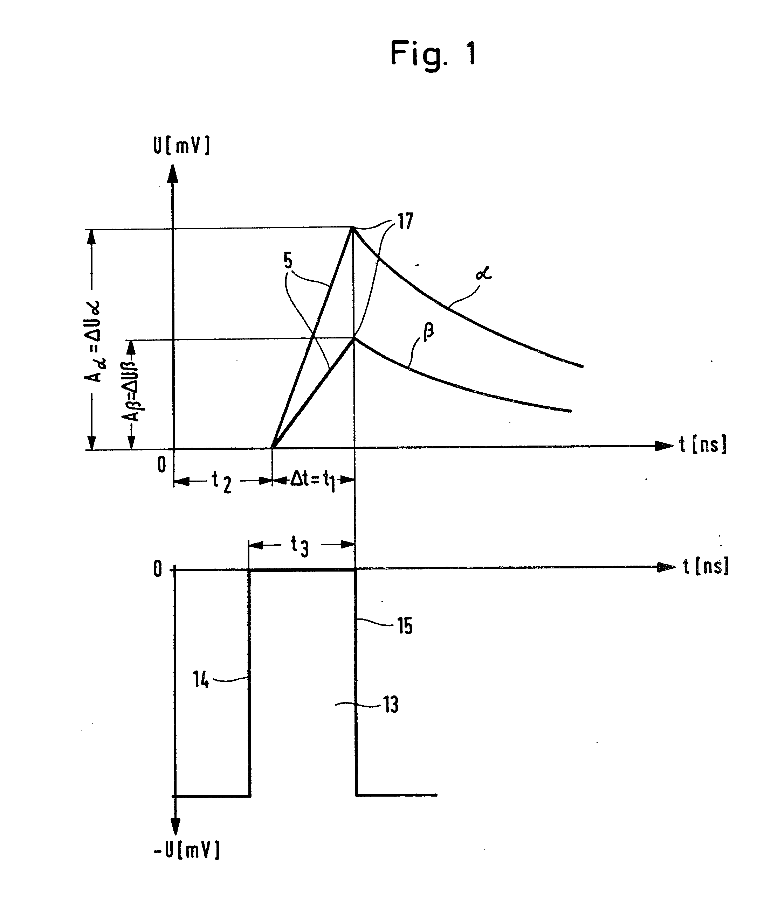

Während der ersten 20 bis 30 ns verlaufen die Vorderflanken von $\alpha$- und $\beta$-Impulsen annähernd geradlinig und weisen stark unterschiedliche Steigungen $\alpha$ und $\beta$ auf. Insbesondere ist in diesem Bereich der Anstieg $U\alpha$ eines $\alpha$-Impulses etwa doppelt so gross wie der Anstieg $U\beta$ eines $\beta$-Impulses. Dieser Zusammenhang ist in Fig. 1 für die ersten 30 ns = $t_1$ der Impulse dargestellt. Im späteren Verlauf der Impulse kann eine weitgehende Annäherung in bezug auf die Steilheit des Anstieges eintreten. Die Verwendung der Differenzenquotienten $\Delta U\alpha/\Delta t$ und $\Delta U\beta/\Delta t$ als Kriterium der Diskriminierung ist also nur in den ersten 20 bis 30 ns möglich.

Bei dem vorgeschlagenen Verfahren wird deshalb eine entsprechende Zeitdiskriminierung der Detektorimpulse durchgeführt. In der vorgegebenen konstanten Zeit $t_1$ erreichen $\alpha$- und $\beta$-Impulse stark unterschiedliche Amplituden A, nämlich $\Delta U\alpha \approx 2 \Delta U\beta$, so dass durch eine der Zeitdiskriminierung nachgeordnete Amplitudendiskriminierung die Detektorimpulse in der überwiegenden Mehrheit der Ereignisse eindeutig als $\alpha$- oder $\beta$-Impulse identifizierbar sind. Ein wenige Prozent betragender Rest von Ereignissen lässt sich nicht eindeutig zuordnen und wird als «Güte» der Messung gezählt.

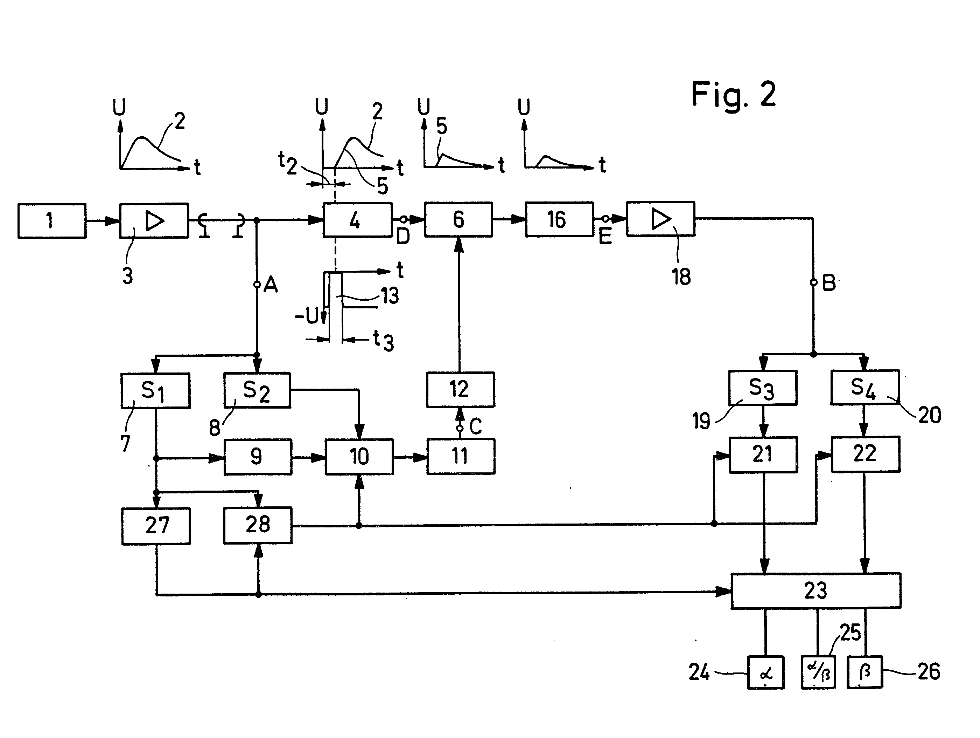

Die Fig. 2 zeigt das Blockschaltbild eines Diskriminators zum Durchführen des Verfahrens.

In einem Detektor 1 nach Patentanmeldung EP-A-0 033 381 zum gleichzeitigen Messen von $\alpha$- und/oder $\beta$-Teilchen werden Detektorimpulse 2 erzeugt, die zum Ausgleichen von durch den Aufbau des Detektors bedingten Signalabschwächungen mit einem in den Detektor 1 integrierten ersten Verstärker 3 verstärkt werden, der eine Ausgangsimpedanz von 50 Ohm aufweist. Das hat den Vorteil, dass der Detektor mit einem 50 Ohm Koaxkabel über eine den Detektorimpuls 2 um eine vorbestimmte Zeit $t_2$ verzögernde Verzögerungsleitung 4 auf einen den Anstieg der Vorderflanke 5 des Detektorimpulses 2 nach einer vorbestimmten für die Zeitdiskriminierung eingestellten Zeit $t_1$ unterbrechenden elektronischen Schalters 6 geschaltet werden kann.

Der Ausgang A des Detektors 1 ist auf einen ersten Komparator 7 mit einer vorbestimmten ersten Schwelle $S_1$ und auf einen zweiten Komparator 8 mit einer vorbestimmten zweiten Schwelle $S_2 > S_1$ geschaltet.

Der nichtinvertierende Ausgang des ersten Komparators 7 ist über ein digitales Verzögerungsglied 9, der invertierende Ausgang des zweiten Komparators 8 direkt auf eine Startschaltung 10 geschaltet, welche ausschliesslich bei die zweite Schwelle $S_2$ überschreitenden Amplituden A des Detektorimpulses 2 die Startschaltung 10 triggert.

Der Ausgang der Startschaltung 10 ist auf eine Pegelanpassung 11 geschaltet, die eine Änderung des Eingangssignales von «0» auf «1» in eine Spannungsänderung von 0 auf –5 Volt umsetzt.

Ein der Pegelanpassung 11 nachgeschalteter Torzeitimpulsgenerator 12 erzeugt Torzeitimpulse 13 vorbestimmter, konstanter im Nanosekundenbereich liegender Impulsbreite $t_3$.

Der Ausgang des Torzeitimpulsgenerators 12 ist auf den Steuereingang des durch den Torzeitimpuls 13 während der Zeit $t_1$ aufsteuerbaren elektronischen Schalters 6 geschaltet.

Die Zeitverzögerung $t_2$ des Detektorimpulses ist bestimmt durch die Zeitverzögerungen der für die Signalverarbeitung erforderlichen Bauelemente und ist eingestellt durch die Verzögerungsleitung 4.

Die Vorderflanke 14 des Torzeitimpulses 13 liegt unmittelbar vor dem Ablauf der Verzögerungszeit $t_2$. Der elektronische Schalter 6 wird durch die Rückflanke 15 des Torzeitimpulses 13 gesperrt. Die Rückflanke 15 bestimmt also auch das Ende der für die Zeitdiskriminierung vorgesehenen Zeit $t_1$ und stoppt den Anstieg der Vorderflanke 5 des Detektorimpulses 2 bei einem Amplitudenwert A$\alpha$, A$\beta$.

Dem elektronischen Schalter 6 ist ein Impulsformer 16 nachgeschaltet, der die den Amplituden A$\alpha$, A$\beta$ entsprechenden Signalspannungen des zeitdiskriminierten Detektorimpulses 2 in eine elektrische Ladung eines Kondensators umsetzt und den peakförmigen Höchstwert 17 der durch die Zeitdiskriminierung gewonnenen Amplituden A$\alpha$, A$\beta$ zeitlich dehnt.

Der Ausgang des Impulsformers 16 ist über einen zweiten Verstärker 18 auf die Eingänge eines dritten Komparators 19 mit einer vorbestimmten dritten Schwelle $S_3 > S_2$ und eines vierten Komparators 20 mit einer vorbestimmten vierten Schwelle $S_4 > S_3$ geschaltet.

Der invertierende Ausgang des dritten Komparators 19 ist auf einen vierten Speicher 21, der invertierende Ausgang des vierten Komparators 20 ist auf einen fünften Speicher 22 geschaltet.

Die Ausgänge des vierten Speichers 21 und des fünften Speichers 22 sind auf eine die zeit- und amplitudendiskriminierten Detektorimpuls in $\alpha$-Signale, $\beta$-Signale und $\alpha$- oder $\beta$-Signale sortierende Auswertelogik 23 nachgeschaltet.

Der Auswertelogik 23 ist ein erster Zähler 24 für $\alpha$-Signale, ein zweiter Zähler 25 für $\beta$-Signale und ein dritter Zähler 26 für $\alpha$- oder $\beta$-Signale nachgeschaltet.

Dem invertierenden Ausgang des ersten Komparators 7 ist ein Zeitglied 27 nachgeschaltet, dessen Ausgang mit der Auswertelogik 23 verbunden ist.

Am Ende der Messzeit erzeugt das Zeitglied einen Leseimpuls zum Übertragen des Inhaltes des vierten Speichers 21 oder des fünften Speichers 22 über die Auswertelogik 23 in einen der Zähler 24, 25, 26. Dem invertierenden Ausgang des ersten Komparators 7 ist eine Resetlogik 28 nachgeschaltet, deren zweiter Eingang mit dem Ausgang des Zeitgliedes 27 verbunden ist und deren Ausgang auf die Reseteingänge der Speicher, der Resetlogik 28, der Startschaltung 10 und des vierten und fünften Speichers 21, 22 geschaltet ist.

Jeder der Speicher besteht aus einer bistabilen Kippstufe.

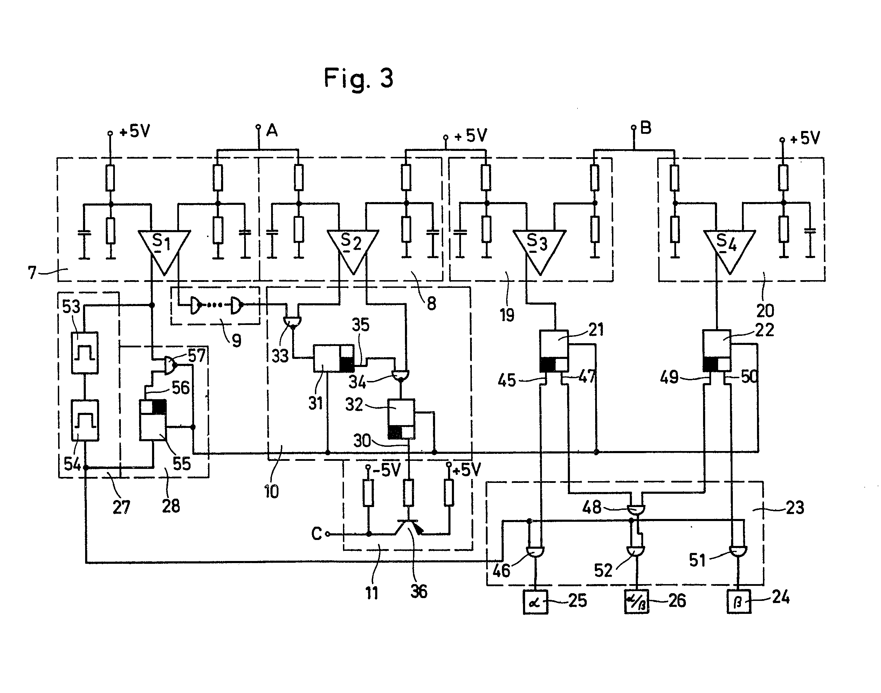

Fig. 3 zeigt das Schaltbild der Komparatoren, der Speicher, der Startschaltung 10, der Auswertelogik 23 und der Resetlogik 28.

Die Startschaltung 10 erzeugt ausschliesslich bei die zweite Schwelle $S_2$ überschreitenden Signalamplituden A$\alpha$, A$\beta$ an ihrem Ausgang 30 ein die Pegelanpassung 11 triggerndes Signal.

Die Startschaltung 10 besteht aus einer zweiten bistabilen Kippstufe 31, einer dritten bistabilen Kippstufe 32, einem zweiten NAND-Gatter 33 und einem dritten NAND-Gatter 34.

Dem zweiten NAND-Gatter 33, dessen erster Eingang auf den Ausgang des digitalen Verzögerungsgliedes 9 und dessen zweiter Eingang auf den invertierenden Ausgang des zweiten Komparators 8 geschaltet ist, ist die zweite bistabile Kippstufe 31 nachgeschaltet.

Der nichtinvertierende Ausgang 35 der zweiten Kippstufe 31 ist auf den ersten Eingang des dritten NAND-Gatters 34 geschaltet, dessen zweiter Eingang mit dem nichtinvertierenden Ausgang des zweiten Komparators 8 verbunden ist.

Dem Ausgang des dritten NAND-Gatters 34 ist die dritte bistabile Kippstufe 32 nachgeschaltet, deren invertierender Ausgang 30 auf die Pegelanpassung 11 geschaltet ist.

Die Pegelanpassung 11 besteht im wesentlichen aus einem pnp-Transistor 36, dessen Basis auf den Ausgang 30 der Startschaltung 10, dessen Emitter auf eine positive Spannung von 5 Volt und dessen Kollektor auf eine negative Spannung von 5 Volt geschaltet ist.

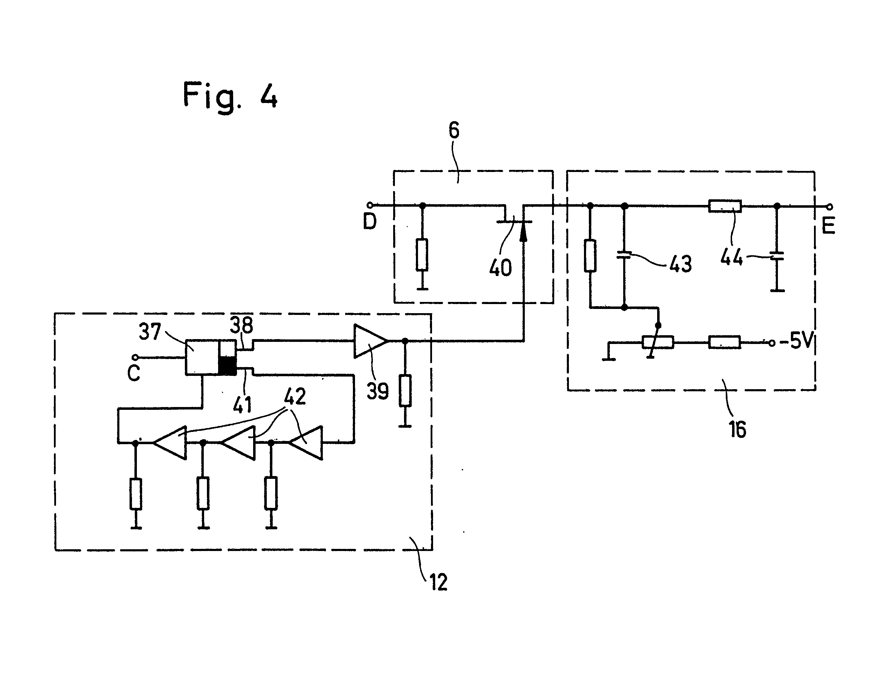

Der Ausgang der Pegelanpassung 11 ist über den Punkt C der Schaltung mit dem Eingang einer sechsten bistabilen Kippstufe 37 des in Fig. 4 dargestellten Torzeitimpulsgenerators 12 verbunden.

Der invertierende Ausgang 38 der Kippstufe 37 ist über eine Treiberstufe 39 auf die Steuerelektrode des als Feldeffekttransistor 40 ausgebildeten elektronischen Schalters 6 geschaltet.

Der nichtinvertierende Ausgang 41 der sechsten bistabilen Kippstufe 37 ist über ein die Öffnungszeit $t_3$ des FET 40 bestimmendes Verzögerungsglied 42 auf deren Reseteingang zurückgeführt.

Die fallende Flanke des von der Pegelanpassung 11 erzeugten Steuersignales triggert die sechste bistabile Kippstufe 37, deren invertierender Ausgang 38 von –5 Volt auf 0 Volt umschaltet und dadurch die Vorderflanke 14 des in Fig. 1 gezeichneten Torzeitimpulses 13 erzeugt.

Gleichzeitig geht der nichtinvertierende Ausgang 41 von 0 auf –5 Volt. Dieses Signal wird durch das Verzögerungsglied 42 um die Zeit $t_3$ verzögert auf den Reseteingang zurückgeführt und erzeugt die Rückflanke 15 des Torzeitimpulses 13, der die Öffnungszeit $t_3$ des elektronischen Schalters 6 bestimmt.

Von dem am Punkt D der Schaltung ankommenden Detektorimpuls 2 gelangt über den elektronischen Schalter 6 ein durch dessen Öffnungszeit $t_3$ (Zeitdiskriminierung) begrenzter Teil der Vorderflanke 5 zum Impulsformer 16, dessen Kondensator 43 während der Zeit $t_3$ aufgeladen wird und sich bis zum Beginn des nächsten Messzyklus anschliessend entlädt. Ein nachgeschaltetes Integrierglied 44 bewirkt eine zeitliche Dehnung des peakförmigen Höchstwertes 17 der durch die Zeitdiskriminierung gewonnenen Impulsamplituden $A\alpha$, $A\beta$, die über den Punkt E der Schaltung den zweiten Verstärker 18 und den Punkt B der Schaltung auf den die Amplitudendiskriminierung bewirkenden Teil der Schaltungsanordnung übertragen werden.

Der nichtinvertierende Ausgang 45 des als bistabile Kippstufe ausgebildeten vierten Speichers 21 ist auf einen ersten Eingang eines ersten UND-Gatters 46, der invertierende Ausgang 47 ist auf einen ersten Eingang eines zweiten UND-Gatters 48 geschaltet, dessen zweiter Eingang auf den nichtinvertierenden Ausgang 49 des fünften Speichers 22 geschaltet ist.

Der invertierende Ausgang 50 des fünften Speichers 22 ist auf einen ersten Eingang eines dritten UND-Gatters 51 geschaltet.

Der Ausgang des zweiten UND-Gatters 48 ist auf einen ersten Eingang eines vierten UND-Gatters 52 geschaltet. Der zweite Eingang des ersten UND-Gatters 46, der zweite Eingang des dritten UND-Gatters 51 und der zweite Eingang des vierten UND-Gatters 52 sind auf den Ausgang des Zeitgliedes 27 geschaltet.

Der Ausgang des ersten UND-Gatters 46 ist auf einen die β-Ereignisse zählenden zweiten Zähler 25, der Ausgang des dritten UND-Gatters 51 ist auf einen die α-Ereignisse zählenden ersten Zähler 24 und der Ausgang des vierten UND-Gatters 52 ist auf einen die weder dem α- noch dem β-Zähler 24, 25 eindeutig zuzuordnenden, α- und β-Ereignisse zählenden dritten Zähler 26 geschaltet. Das erste bis vierte UND-Gatter 46, 48, 51, 52 bildet die Auswertelogik 23.

Dem invertierenden Ausgang des ersten Komparators 7 ist eine erste monostabile Kippstufe 53 und dieser eine zweite monostabile Kippstufe 54 nachgeschaltet; die beiden Kippstufen bilden das Zeitglied 27. Der Ausgang des Zeitgliedes 27 ist auf den Eingang einer ersten bistabilen Kippstufe 55 geschaltet, deren invertierender Ausgang 56 mit dem ersten Eingang eines ersten NAND-Gatters 57 verbunden ist. Der zweite Eingang des ersten NAND-Gatters 57 ist auf den invertierenden Ausgang des ersten Komparators 7 geschaltet. Der Ausgang des ersten NAND-Gatters 57 ist auf die Rückstelleingänge der ersten bis fünften bistabilen Kippstufen 55, 31, 32, 21, 22 geschaltet. Die erste bistabile Kippstufe 55 und das erste NAND-Gatter 57 bilden die Resetlogik 28.

Abhängig von der Signalamplitude existieren unterschiedliche Möglichkeiten der Signalverarbeitung.

$S_1 < A < S_2$

Wenn die Amplitude A des Detektorsignales 2 die erste Schwelle $S_1$ überschreitet, jedoch die zweite Schwelle $S_2$ nicht erreicht, wird der nichtinvertierende Ausgang des ersten Komparators 7 und damit der erste Eingang des zweiten NAND-Gatters 33 von «0» auf «1» gesetzt.

Der zweite Eingang des zweiten NAND-Gatters 33, der mit dem invertierenden Ausgang des zweiten Komparators 8 verbunden ist, bleibt auf ‹1›, so dass der Ausgang des zweiten NAND-Gatters 33 und damit der Eingang der zweiten bistabilen Kippstufe 31 und deren nichtinvertierender Ausgang von ‹1› auf ‹0› wechselt.

Der erste Eingang des dritten NAND-Gatters 34 geht also auf ‹0›, der zweite Eingang bleibt auf ‹0›, und der Ausgang bleibt auf ‹1›, so dass der invertierende Ausgang des dritten Speichers 32 auf ‹0› bleibt und die Startschaltung 10 einen Messvorgang mit Zeit- und Amplitudendiskrimination nicht einleitet.

Der invertierende Ausgang des ersten Komparators 7 wechselt gleichzeitig von ‹1› auf ‹0›. Die fallende Flanke stösst die erste monostabile Kippstufe 53 und diese zeitverzögert eine zweite monostabile Kippstufe 54 des Zeitgliedes 27 an, dessen Ausgang auf den ersten Eingang des ersten UND-Gatters 46 der Auswertelogik 23 geschaltet ist. Der zweite Eingang des ersten UND-Gatters 46 steht auf ‹1›, so dass durch das ‹1›-Signal des Zeitgliedes 27 ausschliesslich der dem ersten UND-Gatter 38 nachgeschaltete zweite Zähler 25 für β-Signale einen Zählimpuls erhält.

$A > S_2$

Wenn die Amplitude A des Detektorsignales 2 die erste Schwelle $S_1$ und die zweite Schwelle $S_2$ überschreitet, wechselt der nichtinvertierende Ausgang des zweiten Komparators 8 und damit auch der zweite Eingang des dritten NAND-Gatters 34 von «0» auf «1». Dessen erster Eingang ist auf «1», so dass der Ausgang von «1» auf «0» geht. Die fallende Flanke setzt den dritten Speicher 32 und der Ausgang 30 der Startschaltung 10 wechselt von ‹0› auf ‹1›.

Die Pegelanpassung 11 setzt den Triggerimpuls der Startschaltung 10 in eine Spannungsänderung von 0 Volt auf –5 Volt um. Diese fallende Flanke setzt die sechste bistabile Kippstufe 37, die mit einer Betriebsspannung von 0 und –5 Volt arbeitet. Der invertierende Ausgang 38 wechselt von –5 Volt auf 0 Volt und erzeugt die den Schalter 6 öffnende Vorderflanke 14 des Torzeitimpulses 13 (s. Fig. 1). Der nichtinvertierende Ausgang 41 stellt nach einer durch das Verzögerungsglied 42 bestimmbaren Zeit $t_3$ von ca. 30 ns die Kippstufe zurück. Dabei wird die den Schalter 6 schliessende Rückflanke 15 des Torzeitimpulses 13 erzeugt. Das zeitdiskriminierte Detektorsignal wird nun zur Bestimmung der Amplitude amplitudendiskriminiert.

Dabei sind folgende Fälle möglich:

$S_2 < A < S_3$   eindeutiges β-Signal

Die Amplitude A des Detektorimpulses 2 ist grösser als die Schwelle $S_1$ und $S_2$, so dass eine Zeitdiskriminierung ausgelöst wird (siehe $A > S_2$). Da jedoch die Schwelle $S_3$ nicht erreicht wird, bleiben die Ausgänge 45, 47 und 49, 50 des vierten und des fünften Speichers 21, 22 unverändert. Ausschliesslich der dem nichtinvertierenden Ausgang des vierten Speichers 21 nachgeschaltete erste Eingang des ersten UND-Gatters 46 der Auswertelogik 23 steht auf ‹1›, so dass das ‹1›-Signal des Zeitgliedes 27 ausschliesslich den Ausgang des ersten UND-Gatters 46 auf ‹1› setzt und der zweite Zähler 25 ein β-Signal zählt.

$S_3 < A < S_4$   α- oder β-Signal

Wie unter $A > S_2$ erläutert, wird eine Zeitdiskriminierung ausgelöst. Der invertierende Ausgang des dritten Komparators 19 und der nichtinvertierende Ausgang 45 des vierten Speichers 21 geht von ‹1› auf ‹0›, der invertierende Ausgang 47 des Speichers 21 wechselt von ‹0› auf ‹1›. Am fünften Speicher 22 bleibt der nichtinvertierende Ausgang 49 auf 1 und der invertierende Ausgang 51 auf 0. Der erste und der zweite Eingang des zweiten UND-Gatters 48 und damit dessen Ausgang sind auf ‹1›. Das vierte UND-Gatter 52 führt damit an seinem ersten und zweiten Eingang und an seinem Ausgang eine ‹1›, so dass der dritte Zähler 26 einen Zählimpuls erhält. Je weniger Impulse der Zähler 26 zählt, um so besser ist die Messeinrichtung.

$A > S_4$   eindeutiges α-Signal

Der invertierende Ausgang des vierten Komparators 20 geht von ‹1› auf ‹0›, der invertierende Ausgang 50 des fünften Speichers 22 wechselt von ‹0› auf ‹1›. Da die Schwelle $S_1$ überschritten ist, werden über den Ausgang des Zeitgliedes 27 die ersten Eingänge des ersten, dritten und vierten UND-Gatters 46, 51, 52 auf ‹1› gestellt. Damit geht der Ausgang des dritten UND-Gatters auf ‹1› und der erste Zähler 24 zählt einen α-Impuls. Der zweite und der dritte Zähler 25, 26 erhalten keinen Zählimpuls, da die zweiten Eingänge der dem Zähler vorgeschalteten ersten und vierten UND-Gatter 46, 52 auf ‹0› stehen.

Der positive Impuls der zweiten monostabilen Kippstufe 54 wird also als Lesesignal für den vierten und fünften Speicher 21, 22 verwendet. Während der Zeit, in der der Ausgang der ersten monostabilen Kippstufe 53 auf ‹1› liegt, läuft die Zeitdiskriminierung. Die Rückflanke des Impulses am Ausgang der zweiten monostabilen Kippstufe 54 beendet den Lesevorgang des vierten und fünften Speichers 21, 22 und setzt gleichzeitig den invertierten Ausgang 56 der ersten bistabilen Kippstufe 55 und den ersten Eingang des ersten NAND-Gatters 57 auf ‹1›. Liegt dessen anderer, mit dem invertierenden Ausgang des ersten Komparators 7 verbundener Eingang ebenfalls auf ‹1›, so geht der Ausgang des ersten NAND-Gatters 57 auf ‹0›. Dadurch werden der erste bis fünfte Speicher 55, 31, 32, 21, 22 in eine vorbestimmte Ausgangsstellung zurückgesetzt und für eine neue Messung vorbereitet.

Die Verknüpfung des Ausganges 56 des ersten Speichers 55 mit dem invertierenden Ausgang des ersten Komparators 7 stellt sicher, dass der Resetimpuls nur dann auf die Speicher gegeben wird, wenn sicher ist, dass die Schwelle $S_1$ des ersten Komparators 7 nicht überschritten wurde, also sich kein Detektorsignal 2 auf der Leitung befindet.

Die Impulslänge eines α- oder β-Impulses beträgt ca. 150 ns, die für eine Messung erforderliche Zeit ist etwa 1,2 μs. Wegen der statistischen Verteilung der Impulse können während einer Messung ein oder mehrere weitere Impulse auftreten. Sobald ein Messvorgang durch Setzen des dritten Speichers 32 eingeleitet ist, werden deshalb weitere α- oder β-Impulse durch die Schaltung unterdrückt, bis nach dem Resetimpuls deren Messbereitschaft wieder hergestellt ist.

Voraussetzung für eine exakte Messung ist, dass der Rücksetzimpuls zeitlich zwischen zwei Messsignale fällt, so dass die Messeinrichtung beim Eingang eines Detektorsignales 2 betriebsbereit ist.

Durch die Verknüpfungen der Schaltungsanordnung ist sichergestellt, dass die Zeitdiskriminierung immer mit dem Anstieg der Vorderflanke des Detektorsignales 2 beginnt.

Bezugszeichenliste:

Fig. 1

| | |
|---|---|
| α | Steigung der Vorderflanke eines von α-Teilchen erzeugten Detektorimpulses in der Zeit $t_2$ |
| β | entsprechend α- für β-Teilchen |
| $t_1$ | für die Zeitdiskriminierung eingestellte Zeit in ns |
| Aα, Aβ | Impulsamplitude |
| $\Delta U\alpha$ | Amplitude des α-Impulses zur Zeit $t_1$ |
| $\Delta U\beta$ | Amplitude des β-Impulses zur Zeit $t_1$ |
| $t_2$ | Verzögerung des Detektorimpulses |
| $t_3$ | Breite des Torzeitimpulses, Öffnungszeit von 6 |

Fig. 2

| | |
|---|---|
| 1 | Detektor |
| 2 | Detektorimpulse |
| 3 | 1. Verstärker |
| 4 | Verzögerungsleitung |
| 5 | Vorderflanke von 2 |
| 6 | elektronischer Schalter |
| 7 | 1. Komparator |
| $S_1$ | 1. Schwelle an 7 |
| 8 | 2. Komparator |
| $S_2$ | 2. Schwelle an 8 |
| 9 | digitales Verzögerungsglied |
| 10 | Startschaltung |
| 11 | Pegelanpassung |
| 12 | Torzeitimpulsgenerator |
| 13 | Torzeitimpuls |
| 14 | Vorderflanke von 13 |

| 15 | Rückflanke von 13 |
|---|---|
| 16 | Impulsformer |
| 17 | Höchstwert von $AU\alpha$, $\Delta U\beta$ |
| 18 | 2. Verstärker |
| 19 | 3. Komparator |
| $S_3$ | 3. Schwelle von 19 |
| 20 | 4. Komparator |
| $S_4$ | 4. Schwelle von 20 |
| 21 | 4. Speicher (bistab. Kippstufe) |
| 22 | 5. Speicher (bistab. Kippstufe) |
| 23 | Auswertelogik |
| 24 | 1. Zähler |
| 25 | 2. Zähler |
| 26 | 3. Zähler |
| 27 | Zeitglied |
| 28 | Resetlogik |

Fig. 3

| 30 | Ausgang von 10 |
|---|---|
| 31 | 2. bistabile Kippstufe |
| 32 | 3. bistabile Kippstufe |
| 33 | 2. NAND-Gatter |
| 34 | 3. NAND-Gatter |
| 35 | nichtinvertierender Ausgang von 31 |
| 36 | pnp-Transistor von 11 |
| 37 | 6. bistabile Kippstufe |
| 38 | invert. Ausgang von 37 |
| 39 | Treiberstufe |
| 40 | FET von 6 |
| 41 | nichtinvert. Ausgang von 37 |
| 42 | Verzögerungsglied von 12 |
| 43 | Kondensator in 16 |
| 44 | Integrierglied |
| 45 | nichtinvert. Ausgang von 21 |
| 46 | 1. UND-Gatter von 23 |
| 47 | invertierender Ausgang von 21 |
| 48 | 2. UND-Gatter von 23 |
| 49 | nichtinvert. Ausgang von 22 |
| 50 | invert. Ausgang von 22 |
| 51 | 3. UND-Gatter von 23 |
| 52 | 4. UND-Gatter von 23 |
| 53 | 1. monostabile Kippstufe von 27 |
| 54 | 2. monostabile Kippstufe von 27 |
| 55 | 1. bistabile Kippstufe von 28 |
| 56 | invertierender Ausgang von 55 |
| 57 | 1. NAND-Gatter von 55 |

## Patentansprüche

1. Verfahren zum Diskriminieren von durch Alpha- und/oder Betastrahler in einem Detektor (1) erzeugten Detektorimpulsen (2), deren Vorderflanken (5) in einem Anfangsbereich vorbestimmter Dauer während einer vorbestimmten, im Nanosekundenbereich liegenden Zeit teilchenspezifisch, annähernd konstant ansteigen und die von Alphateilchen erzeugten Impulse eine erste Steigung ($\alpha$) aufweisen, die wesentlich grösser ist als eine zweite Steigung ($\beta$) der von Betateilchen verursachten Impulse, wobei die Detektorimpulse (2) in einer Auswerteeinrichtung getrennt nach $\alpha$- und $\beta$-Teilchen gezählt werden, gekennzeichnet durch folgende Merkmale,

a) die Amplitude ($A\alpha$, $A\beta$) jedes eine vorbestimmte zweite Schwelle ($S_2$) überschreitenden Detektorimpulses (2) wird während einer in dem Bereich annähernd konstanter Steigung ($\alpha$, $\beta$) der Vorderflanke (5) liegenden vorbestimmten konstanten Zeit ($t_1$) gemessen (Zeitdiskriminierung),

b) die durch Zeitdiskriminierung gemessenen Signalamplituden ($A\alpha$, $A\beta$) der Detektorimpulse (2) werden durch Amplitudendiskriminierung ausgewertet und dabei durch mehrere Schwellen ($S_1$, $S_2$, $S_3$, $S_4$) folgende Zuordnungen der Detektorimpulse bewirkt,

$\alpha$) Impulsamplituden (A) oberhalb einer grössten vorbestimmten vierten Schwelle ($S_4$) werden als eindeutige $\alpha$-Signale gewertet,

$\beta$) Impulsamplituden (A) oberhalb der zweiten Schwelle ($S_2$) und unterhalb einer dritten Schwelle ($S_2 < S_3 < S_4$) werden als eindeutige $\beta$-Signale gewertet,

$\gamma$) Impulsamplituden (A) oberhalb der dritten Schwelle ($S_3$) und unterhalb der vierten Schwelle ($S_4$) sind $\alpha$- oder $\beta$-Impulsen zuzuordnen und werden als die Fehlerquote der Messung darstellende Güte gewertet,

c) die Amplitude (A) jedes eine vorbestimmte erste Schwelle ($S_1 < S_2$) überschreitenden und die zweite Schwelle ($S_2$) unterschreitenden Detektorimpulses (2) wird unter Ausschluss der Zeitdiskriminierung als eindeutiges $\beta$-Signal gewertet (Amplitudendiskriminierung).

2. Verfahren nach Anspruch 1, gekennzeichnet durch folgende Merkmale,

a) jeder Detektorimpuls (2), dessen Amplitude (A) die zweite Schwelle ($S_2$) überschreitet, wird um eine Zeit ($t_2$) verzögert, die bestimmt ist durch die Zeitverzögerungen der für die Signalverarbeitung erforderlichen Bauelemente,

b) der nach Ablauf der Verzögerungszeit ($t_2$) beginnende Anstieg der Vorderflanke (5) des Detektorimpulses (2) wird nach Ablauf der die Zeitdiskriminierung bestimmenden Zeit ($t_1$) gestoppt,

c) die für die Zeitdiskriminierung erforderliche Zeit ($t_1$) ist vorbestimmt durch die Rückflanke (15) eines Torzeitimpulses (13), dessen im Nanosekundenbereich liegende Zeitdauer ($t_3$) so eingestellt ist, dass die Vorderflanke (14) des Torzeitimpulses (13) unmittelbar vor dem Anstieg des Detektorimpulses (2) liegt,

d) die Signalspannung des zeitdiskriminierten Detektorimpulses (2) wird umgesetzt in eine elektrische Ladung eines kapazitiven Speichers,

e) der Lade- und Entladespannungsverlauf des kapazitiven Speichers wird integriert und dadurch der peakförmige Höchstwert der durch Zeitdiskriminierung bestimmten Spannungsamplitude des Detektorimpulses (2) in einen zeitlich gedehnten Höchstwert umgesetzt.

3. Schaltungsanordnung in einem Detektor zum Durchführen des Verfahrens nach Anspruch 1, mit einer Auswerteeinrichtung mittels Diskriminierung der Impulse nach Anstiegszeit und/oder Amplitude, mit Zähleinrichtungen für Alpha- und Beta-Teilchen und mit Digitalzählern, gekennzeichnet durch folgende Merkmale,

a) der Ausgang des Detektors (1) ist über eine den Detektorimpuls (2) um eine vorbestimmte Zeit ($t_2$) verzögernde Verzögerungsleitung (4) auf einen den Anstieg der Vorderflanke (5) des Detektorimpulses (2) nach einer vorbestimmten, für die Zeitdiskriminierung eingestellten Zeit ($t_1$) unterbrechenden elektronischen Schalter (6) geschaltet,

b) der Ausgang des Detektors (1) ist auf einen ersten Komparator (7) mit einer vorbestimmten ersten Schwelle ($S_1$) und auf einen zweiten Komparator (8) mit einer vorbestimmten zweiten Schwelle ($S_2 > S_1$) geschaltet,

c) der nichtinvertierende Ausgang des ersten Komparators (7) ist über ein digitales Verzögerungsglied (9), der invertierende Ausgang des zweiten Komparators (8) direkt auf eine die Zeitdiskriminierung ausschliesslich bei die zweite Schwelle ($S_2$) überschreitenden Amplituden (A) des Detektorimpulses (2) triggernde Startschaltung (10) geschaltet,

d) der Ausgang der Startschaltung (10) ist auf eine Eingangssignaländerungen von «0» auf «1» in Spannungsänderungen von 0 auf –5 Volt umsetzende Pegelanpassung (11) geschaltet,

e) der Pegelanpassung (11) ist ein Torzeitimpuls (13) vorbestimmter, konstanter, im Nanosekundenbereich liegender Impulsbreiten ($t_3$) erzeugender Torzeitimpulsgenerator (12) nachgeschaltet,

f) der den Torzeitimpuls (13) der Impulsbreite ($t_3$) führende Ausgang des Torzeitimpulsgenerators (12) ist auf den Steuereingang des durch den Torzeitimpuls (13) auf steuerbaren elektronischen Schalters (6) geschaltet,

g) dem elektronischen Schalter (6) ist ein Impulsformer (16) zum Umsetzen einer der Amplitude (A$\alpha$, A$\beta$) entsprechenden Signalspannung des zeitdiskriminierten Detektorimpulses (2) in eine elektrische Ladung und zur zeitlichen Dehnung des peakförmigen Höchstwertes (17) nachgeschaltet,

h) der Ausgang des Impulsformers (16) ist über einen zweiten Verstärker (18) auf die Eingänge eines dritten Komparators (19) mit einer vorbestimmten dritten Schwelle ($S_3 > S_2$) und eines vierten Komparators (20) mit einer vorbestimmten vierten Schwelle ($S_4 > S_3$) geschaltet,

i) der invertierende Ausgang des dritten Komparators (19) ist auf einen vierten Speicher (21), der invertierende Ausgang des vierten Komparators (20) ist auf einen fünften Speicher (22) geschaltet,

j) die Ausgänge des vierten Speichers (21) und des fünften Speichers (22) sind auf eine die zeit- und amplitudendiskriminierten Detektorimpulse in $\alpha$-Signale, $\beta$-Signale und $\alpha$- oder $\beta$-Signale sortierende Auswertelogik (23) geschaltet,

k) dem invertierenden Ausgang des ersten Komparators (7) ist ein Zeitglied (27) nachgeschaltet, dessen Ausgang mit der Auswertelogik (23) verbunden ist und zu vorbestimmten Zeiten ein die Übertragung eines Zählimpulses in einen von mehreren der Auswertelogik (23) nachgeschalteten Zählern (24, 25, 26) bewirkenden Impuls führt,

l) dem invertierenden Ausgang des ersten Komparators (7) ist eine Resetlogik (28) nachgeschaltet, deren zweiter Eingang mit dem Ausgang des Zeitgliedes (27) verbunden ist und deren Ausgang auf die Reseteingänge des vierten und fünften Speichers (21, 22) und einen ersten Speicher (29) der Resetlogik (28) und einen zweiten und dritten Speicher (30, 31) der Startschaltung (10) geschaltet ist.

4. Schaltungsanordnung nach Anspruch 3, gekennzeichnet durch folgende Merkmale,

a) einem zweiten NAND-Gatter (33), dessen erster Eingang auf den Ausgang des digitalen Verzögerungsgliedes (9) und dessen zweiter Eingang auf den invertierenden Ausgang des zweiten Komparators (8) geschaltet ist, ist eine zweite bistabile Kippstufe (31) nachgeschaltet,

b) der nichtinvertierende Ausgang (35) der zweiten Kippstufe (31) ist auf einen ersten Eingang eines dritten NAND-Gatters (34) geschaltet, dessen zweiter Eingang mit dem nichtinvertierenden Ausgang des zweiten Komparators (8) verbunden ist,

c) dem Ausgang des dritten NAND-Gatters (34) ist eine dritte bistabile Kippstufe (32) nachgeschaltet, deren invertierender Ausgang (30) auf den Eingang der Pegelanpassung (11) geschaltet ist,

d) die zweite bistabile Kippstufe (31), die dritte bistabile Kippstufe (32), das zweite NAND-Gatter (33) und das dritte NAND-Gatter (34) bilden die Startschaltung (10), die ausschliesslich bei die zweite Schwelle ($S_2$) überschreitenden Signalamplituden (A$\alpha$, A$\beta$) an ihrem Ausgang (30) ein die Pegelanpassung (11) triggerndes Signal erzeugt.

5. Schaltungsanordnung nach Anspruch 3, dadurch gekennzeichnet, dass die Pegelanpassung (11) im wesentlichen aus einem pnp-Transistor (36) besteht, dessen Basis auf den Ausgang (30) der Startschaltung (10), dessen Emitter auf eine positive Spannung von einigen Volt und dessen Kollektor auf eine der positiven Spannung entsprechende negative Spannung geschaltet ist.

6. Schaltungsanordnung nach Anspruch 3, gekennzeichnet durch folgende Merkmale,

a) eine sechste bistabile Kippstufe (37) ist dem Ausgang (C) der Pegelanpassung (11) nachgeschaltet,

b) der bei Eingang des in der Pegelanpassung (11) erzeugten Triggersignales die Vorderflanke (14) des Torzeitimpulses (13) erzeugende invertierende Ausgang (38) der sechsten bistabilen Kippstufe (37) ist über eine Treiberstufe (39) auf die Steuerelektrode des als Feldeffekttransistor (42) ausgebildeten, durch die Vorderflanke (14) des Torzeitimpulses (13) geöffneten elektronischen Schalters (6) geschaltet,

c) der nichtinvertierende Ausgang (41) der sechsten bistabilen Kippstufe (37) ist über ein die Öffnungszeit ($t_3$) des Feldeffekttransistors (40)

bestimmendes Verzögerungsglied (42) auf dessen Reseteingang geschaltet,

d) die sechste bistabile Kippstufe (37), die Treiberstufe (39) und das Verzögerungsglied (42) bilden den Torzeitimpulsgenerator (12).

7. Schaltungsanordnung nach Anspruch 3, gekennzeichnet durch folgende Merkmale,

a) der nichtinvertierende Ausgang (45) des als bistabile Kippstufe ausgebildeten vierten Speichers (21) ist auf einen ersten Eingang eines ersten UND-Gatters (46) geschaltet,

b) der invertierende Ausgang (47) des vierten Speichers (21) ist auf einen ersten Eingang eines zweiten UND-Gatters (48) geschaltet,

c) der nichtinvertierende Ausgang (49) des als bistabile Kippstufe ausgebildeten fünften Speichers (22) ist auf einen zweiten Eingang des zweiten UND-Gatters (48) geschaltet,

d) der invertierende Ausgang (50) des fünften Speichers (22) ist auf einen ersten Eingang eines dritten UND-Gatters (51) geschaltet,

e) der Ausgang des zweiten UND-Gatters (48) ist auf einen ersten Eingang eines vierten UND-Gatters (52) geschaltet,

f) der zweite Eingang des ersten UND-Gatters (46), der zweite Eingang des dritten UND-Gatters (51) und der zweite Eingang des vierten UND-Gatters (52) sind auf den Ausgang des Zeitgliedes (27) geschaltet,

g) der Ausgang des ersten UND-Gatters (46) ist auf einen die β-Ereignisse zählenden zweiten Zähler (25), der Ausgang des dritten UND-Gatters (51) ist auf einen die α-Ereignisse zählenden ersten Zähler (24) und der Ausgang des vierten UND-Gatters (52) ist auf einen die weder dem α- noch dem β-Zähler (24, 25) eindeutig zuzuordnenden, α- und β-Ereignisse zählenden dritten Zähler (26) geschaltet,

h) das erste bis vierte UND-Gatter (46, 48, 51, 52) bildet die Auswertelogik (23).

8. Schaltungsanordnung nach Anspruch 3, gekennzeichnet durch folgende Merkmale,

a) dem invertierenden Ausgang des ersten Komparators (7) ist eine erste monostabile Kippstufe (53) und dieser eine zweite monostabile Kippstufe (54) nachgeschaltet,

b) die erste und die zweite monostabile Kippstufe (53, 54) bilden das Zeitglied (27).

9. Schaltungsanordnung nach Anspruch 3, gekennzeichnet durch folgende Merkmale,

a) der Ausgang des Zeitgliedes (27) ist auf den Eingang einer ersten bistabilen Kippstufe (55) geschaltet, deren invertierender Ausgang (56) mit dem ersten Eingang eines ersten NAND-Gatters (57) verbunden ist,

b) der zweite Eingang des ersten NAND-Gatters (57) ist auf den invertierenden Ausgang des ersten Komparators (7) geschaltet,

c) der Ausgang des ersten NAND-Gatters (57) ist auf die Rückstelleingänge der ersten bis fünften bistabilen Kippstufen (55, 31, 32; 21, 22) geschaltet,

d) die erste bistabile Kippstufe (55) und das erste NAND-Gatter (57) bilden die Resetlogik (28).

---

## Claims

1. Method for discriminating detector pulses (2) generated in a detector (1) by alpha and/or beta emitters wherein the leading edges (5) of said pulses rise, in a starting region of predetermined duration which lies in the nanosecond range, in an almost constant manner and the pulses generated by alpha particles have a first slope ($\alpha$) which is substantially greater than the second slope ($\beta$) of pulses generated by beta particles, with the detector pulses (2) counted separately by alpha and beta particles in an evaluation system, with the following characteristics

a) measuring the amplitude ($A\alpha$, $A\beta$) of each detector pulse (2) which exceeds a predetermined second threshold ($S_2$) during a predetermined constant time period ($t_1$) which lies in the region of almost constant rise ($\alpha$, $\beta$) of the leading edge (5) (time discrimination);

b) evaluating the signal amplitudes ($A\alpha$, $A\beta$) of the detector pulses (2) as measured by time discrimination through amplitude discrimination, with the following assignments of the detector pulses effected via several thresholds ($S_1$, $S_2$, $S_3$, $S_4$):

$\alpha$) counting pulse amplitudes (A) above a highest predetermined fourth threshold value ($S_4$) as unequivocal alpha signals,

$\beta$) counting pulse amplitudes (A) above the second threshold value ($S_2$) and below a third threshold value ($S_2 < S_3 < S_4$) as unequivocal beta signals,

$\gamma$) assigning pulse amplitudes (A) above the third threshold value ($S_3$) and below the fourth threshold value ($S_4$) to alpha or beta pulses and evaluating them as the quality which constitutes the error quota of the measurement;

c) counting the amplitude (A) of each detector pulse (2) exceeding a predetermined first threshold value ($S_1 < S_2$) and underrating the second threshold value ($S_2$) as an unequivocal beta signal while leaving out of consideration the time discrimination (amplitude discrimination).

2. A method as defined in claim 1, wherein

a) each detector pulse (2) whose amplitude (A) exceeds the second threshold ($S_2$) is delayed by a period of time ($t_2$) which is determined by the time delays of the components required for signal processing;

b) the rise of said leading edge (5) of said detector pulse (2) which begins after said delay period of time ($t_2$) is stopped after the expiration of the time period ($t_1$) determining the said time discrimination;

c) said time ($t_1$) required for time discrimination is predetermined by the trailing edge (15) of a gating clock pulse (13) whose duration ($t_3$), which lies in the nanosecond range, has been set such that the leading edge (14) of said gating clock pulse (13) lies immediately ahead of said rise of the detector pulse (2);

d) the signal voltage of said time discriminated detector pulse (2) is converted into an electrical charge of a capacitive memory;

e) the charging and discharging voltage curves of said capacitive memory are integrated and hence the peak shaped maximum of the voltage amplitude of said detector pulse (2) is converted into a maximum which is expanded in time.

3. Circuit arrangement in a detector for implementing the process as defined in claim 1 with an evaluation system based on pulse discrimination after the rise time and/or amplitude, with counting devices for alpha and beta particles and a digital counter, wherein

a) the output of the detector (1) is connected via a delay line (4) delaying the detector pulse (2) by a predetermined time $(t_2)$ to an electronic switch (6) disconnecting the rise of the leading edge (5) of the detector pulse (2) after a predetermined time $(t_1)$ set for time discrimination;

b) the output of the detector (1) is connected to a first comparator (7) with a predetermined first threshold $(S_1)$ and to a second comparator (8) with a predetermined second threshold $(S_2>S_1)$;

c) the non-inverting output of the first comparator (7) is connected via a digital delay member (7), the inverting output of the second comparator (8) is connected directly to a startup circuit (10) triggering the time discrimination exclusively when amplitudes (A) of the detector pulse (2) exceed the second threshold $(S_2)$;

d) the output of the startup circuit (10) is connected to a level equalizer (11) converting input signal changes from «0» to «1» into voltage changes from 0 to -5 Volt;

e) the level equalizer (11) is succeeded by a gating clock pulse generator (12) generating a gating clock pulse (13) of predetermined, constant pulse widths $(t_3)$ lying in the nanosecond range;

f) the output of the gating clock pulse generator (12) carrying the gating clock pulse (13) of the pulse width $(t_3)$ is connected to the control input of the electronic switch (6) controllable by the gating clock pulse (13);

g) the electronic switch (6) is succeeded by a pulse shaper (16) for converting a signal voltage of the time discriminated detector pulse (2) corresponding to the amplitude $(A\alpha, A\beta)$ into an electric charge and for time expansion of the peak shaped maximum value (17);

h) the output of the pulse shaper (16) is connected via a second amplifier (18) to the inputs of a third comparator (19) with a predetermined third threshold $(S_3>S_2)$ and of a fourth comparator (20) with a predetermined fourth threshold $(S_4>S_3)$;

i) the inverting output of the third comparator (19) is connected to a fourth memory (21), the inverting output of the fourth comparator (20) is connected to a fifth memory (22);

j) the outputs of the fourth memory (21) and of the fifth memory (22) are connected to an evaluation logic (23) sorting the time and amplitude discriminated detector pulses into alpha signals, beta signals and alpha or beta signals;

k) the inverting output of the first comparator (7) is succeeded by a time member (27) whose output is connected with the evaluation logic (23) and which, at predetermined times, gives rise to a pulse causing transmission of a counting pulse into one or several counters (24, 25, 26) succeeding the evaluation logic (23);

l) the inverting output of the first comparator (7) is succeeded by a reset logic (28), the second input of which is connected with the output of the time member (27) and the output of which is connected to the reset inputs of the fourth and fifth memories (21, 22) and to a first memory (29) of the reset logic (28), and to a second and third memory (30, 31) of the startup circuit (10).

4. Circuit arrangement as defined in claim 3, wherein

a) a second NAND gate (33) the first input of which is connected to the output of the digital delay member (9) and the second input of which is connected to the inverting output of the second comparator (8), is succeeded by a second bistable flip stage (31);

b) the non-inverting output (35) of the second flip stage (31) is connected to a first output of a third NAND gate (34) the second input of which is connected to the non-inverting output of the second comparator (8);

c) the output of the third NAND gate (34) is succeeded by a third bistable flip stage (32) the inverting output (30) of which is connected to the input of the level equalizer (11);

d) the second bistable flip stage (31), the third bistable flip stage (32), the second NAND gate (33) and the third NAND gate (34) make up the startup circuit (10) which generates a signal triggering the level equalizer (11) exclusively at signal amplitudes $(A\alpha, A\beta)$ exceeding the second threshold $(S_2)$ at their output (30).

5. Circuit arrangement as defined in claim 3 wherein the level equalizer (11) consists essentially of a pnp transistor (36) whose base is connected to the output (30) of the startup circuit (10), whose emitter is connected to a positive voltage of several volts and whose collector is connected to a negative voltage corresponding to the positive voltage.

6. Circuit arrangement as defined in claim 3, wherein

a) a sixth bistable flip stage (37) succeeds the output (C) of the level equalizer (11);

b) the inverting output (38) of the sixth bistable flip stage (37) generating at the input of the trigger signal produced in the level equalizer (11) the leading edge (14) of the gate clock pulse (13) is connected via a driver stage (39) to the control electrode of the electronic switch (6) designed as a field effect transistor (42) and opened by the leading edge (14) of the gate clock pulse (13);

c) the non-inverting output (41) of the sixth bistable flip stage (37) is connected to its reset input via a delay member (42) determining the opening time ($t_3$) of the field effect transistor (40);

d) the sixth bistable flip stage (37), the driver stage (39) and the delay member (42) make up the gate clock pulse generator (12).

7. Circuit arrangement as defined in claim 3, wherein

a) the non-inverting output (45) of the fourth memory (21) forming the bistable flip stage is connected to the first input of a first AND gate (46);

b) the inverting output (47) of the fourth memory (21) is connected to a first input of a second AND gate (48);

c) the non-inverting output (49) of the fifth memory (22) designed as a bistable flip stage is connected to a second input of the second AND gate (48);

d) the inverting output (50) of the fifth memory (22) is connected to a first input of a third AND gate (51);

e) the output of the second AND gate (48) is connected to a first input of a fourth AND gate (52);

f) the second input of the first AND gate (46), the second input of the third AND gate (51), and the second input of the fourth AND gate (52) are connected to the output of the time member (27);

g) the output of the first AND gate (46) is connected to a second counter (25) counting the beta events, the output of the third AND gate (51) is connected to a first counter (24) counting the alpha events, and the output of the fourth AND gate (52) is connected to a third counter (26) counting the alpha and beta events which are neither unambiguously attributable to the alpha counter nor to the beta counter (24, 25);

h) the first to fourth AND gates (46, 48, 51, 52) make up the evaluation logic (23).

8. Circuit arrangement as defined in claim 3, wherein

a) the inverting output of the first comparator (7) is succeeded by a first monostable flip stage (53) and the latter is succeeded by a second monostable flip stage (54);

b) the first and the second monostable flip stages (53, 54) make up the time member (27).

9. Circuit arrangement as defined in claim 3, wherein

a) the output of the time member (27) is connected to the input of a first bistable flip stage (55) whose inverting output (56) is connected with the first input of a first NAND gate (57);

b) the second input of the first NAND gate (57) is connected to the inverting output of the first comparator (7);

c) the output of the first NAND gate (57) is connected to the reset inputs of the first to fifth bistable flip stages (55, 31, 32, 21, 22);

d) the first bistable flip stage (55) and the first NAND gate (57) form the reset logic (28).

**Revendications**

1. Procédé pour la discrimination d'impulsions (2) obtenue dans un détecteur (1) par des sources de rayonnement alpha et/ou béta, impulsions dont les flancs avant (5) croissent spécifiquement par rapport aux particules de façon à peu près constante dans une zone initiale d'une durée prédéterminée pendant un temps prédéterminé se situant dans le domaine des nanosecondes, les impulsions produites par les particules alpha présentant une première pente ascendante ($\alpha$) notablement plus importante qu'une seconde pente ascendante ($\beta$) des impulsions produites par les particules béta, les impulsions de détecteur (2) étant comptées dans un dispositif d'exploitation de façon séparée pour les particules alpha et béta, procédé caractérisé en ce que:

a) l'amplitude (A$\alpha$, A$\beta$) de chaque impulsion de détecteur (2) dépassant un second seuil ($S_2$) prédéterminé est mesurée pendant un temps constant prédéterminé ($t_1$) se situant dans la zone d'accroissement à peu près constant ($\alpha$, $\beta$) du flanc avant (5) (discrimination dans le temps),

b) les amplitudes de signaux mesurées par discrimination dans le temps (A$\alpha$, A$\beta$) des impulsions de détecteur (2) sont évaluées par discrimination en amplitude et les associations suivantes des impulsions de détecteur sont alors déterminées par plusieurs seuils ($S_1$, $S_2$, $S_3$, $S_4$)

$\alpha$) les amplitudes d'impulsions (A) se situant au-dessus d'un quatrième seuil maximal prédéterminé ($S_4$) sont évaluées comme étant des signaux $\alpha$ évidents.

$\beta$) les amplitudes d'impulsions (A) au-dessus du second seuil ($S_2$) et au-dessous d'un troisième seuil ($S_2 < S_3 < S_4$), sont évaluées comme étant des signaux $\beta$ évidents

$\gamma$) les amplitudes d'impulsions (A) se situant au-dessus du troisième seuil ($S_3$) et au-dessous du quatrième seuil ($S_4$) doivent être associées à des impulsions $\alpha$ ou bien $\beta$ et sont évaluées comme constituant le taux d'erreur de la mesure,

c) l'amplitude (A) de chacune des impulsions de détecteur (2) dépassant un premier seuil prédéterminé ($S_1 < S_2$) et restant au-dessous du second seuil ($S_2$) est évaluée, en excluant la discrimination dans le temps, comme constituant un signal $\beta$ évident (discrimination en amplitudes).

2. Procédé selon la revendication 1, caractérisé en ce que:

a) chaque impulsion de détecteur (2) dont l'amplitude (A) dépasse le second seuil ($S_2$) est retardée d'un temps ($t_2$) qui est déterminé par les retards en temps des composants nécessaires pour le traitement du signal,

b) l'accroissement, commençant après l'écoulement du temps de retard ($t_2$), du flanc avant (5) de l'impulsion de détecteur (2) est stoppé après l'écoulement du temps $(t_1)$ déterminant la discrimination dans le temps,

c) le temps $(t_1)$ nécessaire pour la discrimination dans le temps est prédéterminé par le flanc arrière (15) d'une impulsion de temps de porte (13) dont la durée $(t_3)$ se situant dans le domaine des nanosecondes est ajustée de telle sorte que le flanc avant (14) de l'impulsion de temps de porte (13) se situe immédiatement avant l'accroissement de l'impulsion de détecteur (2),

d) la tension de signal de l'impulsion de détecteur (2) discriminée dans le temps est convertie en une charge électrique d'une mémoire capacitive.

e) l'évolution de la tension de charge et de décharge de la mémoire capacitive est intégrée et ainsi la valeur maximale en forme de pics de l'amplitude de tension déterminée par la discrimination dans le temps de l'impulsion de détecteur (2) est convertie en une valeur maximale étendue dans le temps.

3. Dispositif de circuit dans un détecteur permettant la mise en œuvre du procédé selon la revendication 1, avec un dispositif d'exploitation au moyen de la discrimination des impulsions d'après le temps d'accroissement et/ou l'amplitude, avec des dispositifs de comptage pour les particules alpha et béta et avec des compteurs numériques, dispositif caractérisé en ce que:

a) la sortie du détecteur (1) est branchée par l'intermédiaire d'un circuit de retard (4) retardant d'un temps prédéterminé $(t_2)$ l'impulsion de détecteur (2) sur un commutateur électronique (6) interrompant l'accroissement du flanc avant (5) de l'impulsion de détecteur (2) après un temps prédéterminé $(t_1)$ réglé pour la discrimination dans le temps,

b) la sortie du détecteur (1) est branchée sur un premier comparateur (7) avec un premier seuil prédéterminé $(S_1)$ et sur un second comparateur (8) avec un second seuil prédéterminé $(S_2 > S_1)$,

c) la sortie non inversée du premier comparateur (7) est branchée, par l'intermédiaire d'un organe numérique de temporisation (9), et la sortie inversée du second comparateur (68) est branchée directement sur un circuit de démarrage (10) déclenchant la discrimination dans le temps exclusivement lorsque les amplitudes (A) de l'impulsion de détection (2) dépassent le second seuil $(S_2)$,

d) la sortie du circuit de démarrage (10) est branchée sur une adaptation de niveau (11) convertissant les modifications du signal d'entrée de «0» à «1» en modifications de tension de 0 à −5 volts,

e) à la suite de l'adaptation de niveau (11) est branché un générateur d'impulsions de temps de porte (12) engendrant une impulsions de temps de porte (13) de largeurs d'impulsion $(t_3)$ prédéterminées, constantes, se situant dans le domaine des nanosecondes,

f) la sortie du générateur d'impulsions de temps de porte (12) délivrant l'impulsion de temps de porte (13) de largeurs d'impulsion $(t_3)$ est branchée sur l'entrée de commande du commutateur électronique (6) susceptible d'être commandé par l'impulsion de temps de porte (13),

g) à la suite du commutateur électronique (6) est branché un dispositif de mise en forme d'impulsion (16) pour convertir une tension de signal correspondant à l'amplitude $(A\alpha, A\beta)$ de l'impulsion de détecteur (2) discriminée dans le temps, en une charge électrique et pour l'extension dans le temps de la valeur maximale en forme de pics (17),

h) la sortie du dispositif de mise en forme d'impulsion (16) est branchée par l'intermédiaire d'un second amplificateur (18) sur les entrées d'un troisième comparateur (19) avec un troisième seuil prédéterminé $(S_3 > S_2)$ et d'un quatrième comparateur (20) avec un quatrième seuil prédéterminé $(S_4 > S_3)$,

i) la sortie inversée du troisième comparateur (19) est branchée sur une quatrième mémoire (21) et la sortie inversée du quatrième comparateur (20) est branchée sur une cinquième mémoire (22),

j) les sorties de la quatrième mémoire (21) et de la cinquième mémoire (22) sont branchées sur une logique d'exploitation (23) classant en signaux $\alpha$, en signaux $\beta$, et en signaux $\alpha$ ou $\beta$, les impulsions de détecteur discriminées en temps et en amplitudes,

k) à la suite de la sortie inversée du premier comparateur (7) est branché un organe de temporisation (27) dont la sortie est reliée à la logique d'exploitation (23) et délivre pour des temps prédéterminés une impulsion assurant la transmission d'une impulsion de comptage dans l'un de plusieurs compteurs (24, 25, 26) branchés à la suite de la logique d'exploitation (23).

l) à la suite de l'entrée inversée du premier comparateur (7) est branchée une logique de retour à l'état initial (28) dont la seconde entrée est reliée à la sortie de l'organe de temporisation (27) et dont la sortie est branchée sur les entrées de remise à l'état de la quatrième et de la cinquième mémoires (21, 22) ainsi que sur une première mémoire (29) de la logique de remise en état (28) et sur une seconde et troisième mémoires (30, 31) du circuit de démarrage (10).

4. Dispositif de circuit selon la revendication 3, caractérisé en ce que:

a) à la suite d'une seconde porte NON–ET (33) dont la première entrée est branchée sur la sortie de l'organe numérique de temporisation (9) et dont la seconde entrée est branchée sur la sortie inversée du second comparateur (8), est branchée une seconde bascule bistable (31),

b) l'entrée non inversée (35) de la seconde bascule (31) est branchée sur une première entrée d'une troisième porte NON-ET (34) dont la seconde entrée est reliée à la sortie non inversée du second comparateur (8),

c) à la suite de la sortie de la troisième porte NON-ET (34) est branchée une troisième bascule bistable (32) dont la sortie inversée (30) est branchée sur l'entrée de l'adaptation de niveau (11),

d) la seconde bascule bistable (31), la troisième bascule bistable (32), la seconde porte NON-ET (33) et la troisième porte NON-ET (34) constituent le circuit de démarrage (10), qui engendre à sa sortie (30) un signal déclenchant l'adaptation de niveau (11) exclusivement pour des amplitudes de signaux (Aα, Aβ) dépassant le second seuil ($S_2$).

5. Dispositif de circuit selon la revendication 3, caractérisé en ce que l'adaptation de niveau (11) est essentiellement constituée d'un transistor pnp (36) dont la base est branchée sur la sortie (30) du circuit de démarrage (10), et l'émetteur duquel est appliquée une tension positive de quelques volts, tandis qu'à son collecteur est appliquée une tension négative correspondant à la tension positive.

6. Dispositif de circuit selon la revendication 3, caractérisé en ce que:

a) une sixième bascule bistable (37) est branchée à la suite de la sortie (C) de l'adaptation de niveau (11)

b) la sortie inversée (38) de la sixième bascule bistable (37), engendrant le flanc avant (14) de l'impulsion de temps de porte (13) lors de l'entrée du signal de déclenchement engendré dans l'adaptation de niveau (11), est branchée par l'intermédiaire d'un étage excitateur (39) sur l'électrode de commande du commutateur électronique (6) constitué par un transistor à effet de champ (42) et ouvert par le flanc avant (14) de l'impulsion de temps de porte (13),

c) la sortie non inversée (41) de la sixième bascule bistable (37) est branchée, par l'intermédiaire d'un organe de temporisation (42) déterminant le temps d'ouverture ($t_3$) du transistor à effet de champ (40), sur l'entrée de remise à l'état de celui-ci,

d) la sixième bascule bistable (37), l'étage excitateur (39) et l'organe de temporisation (42) constituent le générateur d'impulsions de temps de porte (12),

7. Dispositif de circuit selon la revendication 3, caractérisé en ce que:

a) la sortie non inversée (45) de la quatrième mémoire (21) constituée par une bascule bistable est branchée sur une première entrée d'une première porte ET (46),

b) la sortie inversée (47) de la quatrième mémoire (21) est branchée sur une première entrée d'une seconde porte ET (48),

c) la sortie non inversée (49) de la cinquième mémoire (22) constituée par une bascule bistable est branchée sur une seconde entrée de la seconde porte ET (48),

d) la sortie inversée (50) de la cinquième mémoire (22) est branchée sur une première entrée d'une troisième porte ET (51),

e) la sortie de la seconde porte ET (48) est branchée sur une première entrée d'une quatrième porte ET (52),

f) la seconde entrée de la première porte ET (46), la seconde entrée de la troisième porte ET (51), et la seconde entrée de la quatrième porte ET (52) sont branchées sur la sortie de l'organe de temporisation (27),

g) la sortie de la première porte ET (46) est branchée sur un second compteur (25) comptant les événements β, la sortie de la troisième porte ET (51) est branchée sur un compteur (24) comptant les événements α, et la sortie de la quatrième porte ET (52) est branchée sur un troisième compteur (28) comptant les événements α et β devant être associés de façon univoque soit au compteur α, soit au compteur β (24, 25),

h) la première et les seconde, troisième et quatrième portes ET (46, 48, 51, 52) constituent la logique d'exploitation (23).

8. Dispositif de circuit selon la revendication 3, caractérisé en ce que:

a) à la suite de la sortie inversée du premier comparateur (7) est branchée une première bascule monostable (53) et à la suite de celle-ci, une seconde bascule monostable (54),

b) la première et la seconde bascule monostable (53, 54) constituent l'organe de temporisation (27).

9. Dispositif de circuit selon la revendication 3, caractérisé en ce que:

a) la sortie de l'organe de temporisation (27) est branchée sur l'entrée d'une première bascule bistable (55) dont la sortie inversée (56) est reliée à la première entrée d'une première porte NON-ET (57),

b) la seconde entrée de la première porte NON-ET (57) est branchée sur la sortie inversée du premier comparateur (7),

c) la sortie de la première porte NON-ET (57) est branchée sur les entrées de remise à l'état de la première et des seconde, troisième, quatrième et cinquième bascules bistables (55, 31, 32, 21, 22),

d) la première bascule bistable (55) et la première porte NON-ET (57) constituent la logique de remise à l'état (28).

# Fig. 1

Fig. 2

Fig. 3

# Fig. 4